# EUROPÄISCHE PATENTSCHRIFT

(11) **EP 1 157 947 B1**
(45) Veröffentlichungstag und Bekanntmachung des Hinweises auf die Patenterteilung: **26.01.2005**
(21) Anmeldenummer: 01112693.5
(22) Anmeldetag: 25.05.2001
(51) Int. Cl.: B65G 1/04, B66F 9/07

(54) **Vertikalförderer**
Vertical conveyor
Convoyeur vertical

(30) Priorität: 25.05.2000 DE 10026346
(43) Veröffentlichungstag der Anmeldung: 28.11.2001
(73) Patentinhaber: Grond, Johann Walter, 26723 Emden (DE)
(72) Erfinder: Grond, Johann Walter, 26723 Emden (DE)
(74) Vertreter: Jabbusch, Matthias, Dipl.-Ing.

(56) Entgegenhaltungen:
- EP-A- 0 798 238
- DE-A- 3 300 441
- DE-A- 4 306 469
- DE-B- 1 271 030
- FR-A- 1 180 339
- US-A- 5 615 992

## Beschreibung

Die Erfindung betrifft einen Vertikalförderer zum Transport einer Last in einem Regallager mit den Merkmalen des Oberbegriffs des Patentanspruchs 1.

Bisher werden derartige Regallager mit Gabelstaplern und/oder Flurfördergeräten bedient, die teilweise manuell und teilweise automatisiert betrieben werden können. Bei derartigen Lagersystemen muß mit der zu bewegenden Last immer auch ein Transportgerät mit hohem Eigengewicht bewegt werden. Hierzu ist ein vergleichsweise hoher Energieaufwand notwendig und die mögliche Geschwindigkeit ist begrenzt.

Für eine weitgehende Automatisierung eines solchen Lagers ist es insbesondere notwendig, einen weitgehend automatisch arbeitenden Vertikalförderer zu schaffen.

Vertikalförderer der eingangs genannten Art sind aus verschiedenen Druckschriften bekannt. Die EP 0 798 238 A2 zeigt ein Lagersystem für Langgutpaletten mit einer Beschickungseinrichtung, die verfahrbar ist. In der Beschickungseinrichtung sind gemeinsam verfahrbare ausfahrbare Trag- und Schiebeteile vorgesehen.

Die DE 33 00 441 A1 zeigt eine Speicheranlage für auf Unterlagen angeordneten Beton- oder Keramikformlingn. Ein Vertikalförderer ist mit Hubgabeln mit darauf angeordneten laufenden Förderketten ausgebildet. Aus der DE 43 06 469 A1 ist ein Regallager mit einer Hubbühne bekannt, von der aus Lasten zu beiden Seiten in jeweils angrenzende Regale verschoben werden können. Aus der US 5,615,992 ist ein bewegbarer Vertikalförderer bekannt, der eine vertikalbewegbare Plattform aufweist. Auch aus der DE 1 271 030 ist ein verfahrbares Fahrzeug mit parallelen Schubgabeln bekannt, mit denen Waren in einem Regallager einund ausgelagert werden können. Die FR 1.180.339 beschreibt eine Autogarage mit einem Vertikalförderer nach Art eines Paternostas.

Der Erfindung liegt daher die Aufgabe zugrunde, einen Vertikalförderer der eingangs genannten Art zu schaffen, der zum Einsatz in einem automatisch arbeitenden Regallager geeignet ist und eine besonders hohe Einlagerungsgeschwindigkeit ermöglicht. Die Lösung dieser Aufgabe erfolgt mit einem Vertikalförderer mit den Merkmalen des Patentanspruchs 1. Vorteilhafte Weiterbildungen der Erfindung sind in den Unteransprüchen beschrieben.

Erfindungsgemäß wird ein Vertikalförderer derart ausgebildet, daß er mehrere zueinander beabstandete Aufnahmeeinrichtungen aufweist, die Aufnahmeeinrichtungen zur Aufnahme einer Last ausgelegt sind, die zueinander beabstandeten Aufnahmeeinrichtungen gemeinsam vertikal verfahrbar sind und in jeder außer der untersten Ebene des Vertikalförderers abklappbare Transportelemente vorgesehen sind, wobei beim Steuern einer Last zu einer bestimmten Ebene der Vertikalförderer an eine Position etwas oberhalb der bestimmten Ebene gefahren wird, die abgeklappten Transportelemente zurückgeklappt und der Vertikalförderer nach untengefahren wird und dabei die Last auf den Transportelementen absetzt. Mit einem derartigen Vertikalförderer ist die Übergabe einer zu transportierenden Last besonders leicht möglich, da insbesondere durch die beabstandet zueinander angeordneten Aufnahmeeinrichtungen eine Übergabe durch zwischen diesen beabstandet angeordneten Aufnahmeeinrichtungen vorgesehenen zusätzlichen Elementen besonders einfach möglich ist. Die Aufnahmeeinrichtungen dienen insgesamt zur sicheren Lagerung der Last und sind bevorzugt in zwei zueinander parallelen Reihen ausgebildet, auf denen die Last insgesamt sicher ruht. Als Lasten können beispielsweise Kollies, Paletten oder andere Formen von Lasten transportiert werden. Günstigerweise sind die Lasten auf einer Transportplatte positioniert.

Erfindungsgemäß werden in jeder Ebene des Vertikalförderers, nach unten abklappbare Transportelemente, die vorzugsweise eine Rollenbahn bilden, vorgesehen, die den Transportelementen der unteren Ebene entsprechen. Beim Steuern einer Last zu einer bestimmten Ebene wird der Vertikalförderer dann zunächst an eine Position etwas oberhalb der bestimmten Ebene gefahren werden, ohne das eine ganz exakte und langwierige Positionierung erforderlich wäre. Sobald die Last in dem gewünschten Bereich ist, werden die herabgeklappten Transportelemente, die eine Rollenbahn bilden, nach oben geklappt und der Vertikalförderer wird dann nach unten gefahren und setzt dabei die Last auf den Transportelementen ab. Auf diese Weise läßt sich eine weitere Beschleunigung der Einlagerung erreichen.

In einer bevorzugten Weiterbildung der Erfindung sind die Aufnahmeeinrichtungen angetrieben, so daß eine horizontale Beförderung der Last möglich ist. Auf diese Weise kann eine Last besonders einfach in den Vertikalförderer herein und aus ihm wieder heraustransportiert werden. Günstigerweise sind hierzu umlaufende Bänder vorgesehen, die die einzelnen Aufnahmeeinrichtungen miteinander verbinden und so einen gleichmäßigen Vortrieb der auf den Aufnahmeeinrichtungen liegenden Last sicherstellen.

In einer anderen Weiterbildung der Erfindung weist der Vertikalförderer in mindestens einer Ebene stationäre Transportelemente auf. Bevorzugt ist dies die Grundebene oder der Boden, auf dem die Lasten dem Regallager zugeliefert und in den Vertikalförderer eingelagert werden. Durch die Verwendung derartiger stationärer Transportelemente kann nämlich auch dann ein Transport in der Grundebene oder einer anderen Ebene erfolgen, wenn der Vertikalförderer nicht in dieser Ebene positioniert ist, so daß der Vertikalförderer einerseits gerade eine Last in eine obere Etage des Regallagers transportieren kann und gleichzeitig in der Grundebene Lasten zu hinteren Reihen des Regallagers weiterbefördert werden können. Die stationären Transportelemente sind bevorzugt ebenfalls beabstandet zueinander angeordnet, so daß zwischen diesen Transportelementen andere Elemente, insbesondere die Aufnahmeeinrichtungen, plazierbar sind. Besonders bevorzugt sind die Aufnahmeeinrichtungen und die Transportelemente alternierend zueinander angeordnet, so daß in dem Moment, wenn der Vertikalförderer auf der Ebene der Transportelemente ist, eine nahezu durchgehende Fläche gebildet ist.

Weiterhin ist es günstig, daß die Aufnahmeeinrichtungen bis etwas unterhalb der Transportelemente absenkbar sind. Dadurch kann erreicht werden, daß eine Last auf die Transportelemente aufschiebbar ist, ohne daß die Aufnahmeeinrichtungen mit dem beweglichen Teil des Vertikalförderers diese Bewegung stören würden. In dieser Position etwas unterhalb der Transportelemente kann der vertikal bewegbare Teil des Vertikalförderers in einer Art Ruheposition gehalten werden, ohne daß die darüber liegende horizontale Bewegung in der Grundebene, in der die Lasten den einzelnen Regalreihen zugeführt werden, gestört wird.

In einer bevorzugten Ausführungsform der Erfindung sind die Aufnahmeeinrichtungen im wesentlichen von angetriebenen Rollen gebildet. Auch die Transportelemente sind günstigerweise als Rollen ausgebildet, so daß im Bereich des Vertikalförderers eine durchgehende Reihe von Rollen gebildet ist, die jeweils abwechselnd von einer stationären Rolle und einer zusammen mit dem Vertikalförderer nach oben bewegbaren Rolle ausgebildet ist. Grundsätzlich sind auch andere Ausgestaltungen der Aufnahmeeinrichtungen und der Transportelemente möglich.

Beispielsweise können diese in Form von Förderbändern oder Gleitelementen ausgebildet sein.

Der Vertikalförderer ist in dem Regallager bevorzugt in einer Regalreihe angeordnet, so daß die Last in dem Vertikalförderer eingelagert wird, in dem Vertikalförderer nach oben befördert wird und dann in einer oberen Regalreihe parallel zu einem Regalfach liegt, so daß ein automatisches Entnahmesystem auf den Vertikalförderer genauso zugreift wie auf alle anderen daneben in der Reihe liegenden Regalfächer. Der Vertikalförderer ist also nicht in der Gasse zwischen zwei Regalreihen, sondern in einer Regalreihe, bevorzugt an einem Ende der Regalreihe angeordnet. Es ist jedoch auch denkbar, daß sich die Regalreihe zu beiden Seiten des Vertikalförderers fortsetzt.

In einer anderen Weiterbildung der Erfindung sind die Aufnahmeeinrichtungen wegklappbar ausgebildet, so daß diese dann nicht mehr bis zu ihrer eigentlichen Transportposition hinreichen und daher ohne Beeinträchtigung einer durchlaufenden Last auf- oder abwärts bewegt werden können. Es ist auch denkbar, daß die Aufnahmeeinrichtungen zu den Seiten eingezogen oder weggezogen werden können.

Nachfolgend wird die Erfindung anhand eines in der Zeichnung dargestellten bevorzugten Ausführungsbeispiels weiter erläutert. Im einzelnen zeigen die schematischen Darstellungen in:
- Fig. 1: eine geschnittene Draufsicht auf die Grundebene eines Regallagers;
- Fig. 2: eine Draufsicht auf einen erfindungsgemäßen Vertikalförderer;
- Fig. 3: eine geschnittene Seitenansicht eines erfindungsgemäßen Vertikalförderers;
- Fig. 4: eine geschnittene Seitenansicht eines erfindungsgemäßen Vertikalförderers mit einer angehobenen Last; und
- Fig. 5: eine geschnittene Seitenansicht eines Vertikalförderers in einer anderen Verfahrensstellung.

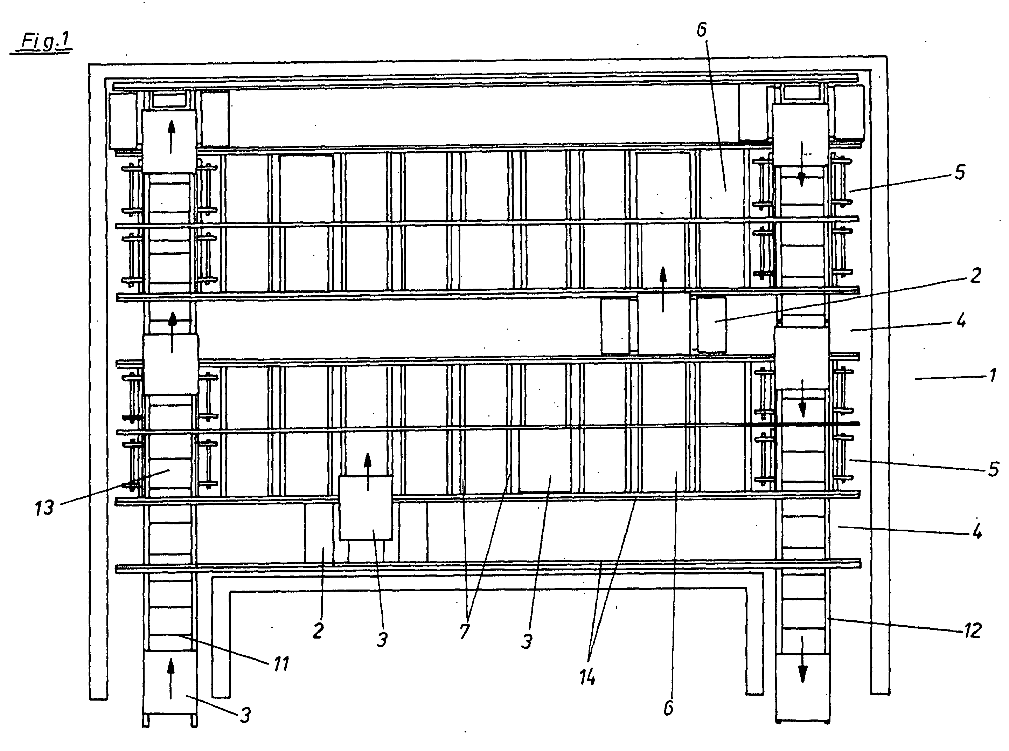

In Fig. 1 ist eine Draufsicht auf die Grundebene eines Regallagers 1 dargestellt, in dem Lasten 3 in Regalplätzen 6 oder Regalfächern ein- und ausgelagert werden. Die Lasten 3 werden dabei auf einer Einlagerunsbahn 11 in das Regallager 1 hineingeführt und auf einer Auslagerungsbahn 12 aus dem Regallager heraustransportiert. Das Regallager 1 weist Regalgassen 4 und Regalreihen 5 auf. Die Lasten 3 werden auf der Einlagerungsbahn 11 zunächst bis zu an den Enden der Regalreihen 5 angeordneten Vertikalförderern transportiert und mit diesen Vertikalförderern 13 in die gewünschte Ebene des Regallagers angehoben. Dort werden sie mit Transportvorrichtungen 2, die auf Schienen 14 entlang der Regalgasse 4 entlanglaufen, aus dem Vertikalförderer 13 entnommen, in der Regalgasse 4 transportiert und dann an den gewünschten Regalplatz 6 abgegeben. Jeder Regalplatz weist zwei parallele Reihen von Führungen auf, auf denen die Last 3 von der Transportvorrichtung 2 an den Regalplatz 6 übergeben wird. Die Einlagerungsbahn 11 kann auch als Ein- und Auslagerungsbahn verwendet werden, so daß die zusätzliche Auslagerungsbahn 12 entfällt. Weiterhin kann das Lager auch auf der anderen Seite der Einlagerungsbahn 11 verlängert ausgebildet sein, so daß der Vertikalförderer 13 dann mitten in einer Regalreihe 5 angeordnet ist.

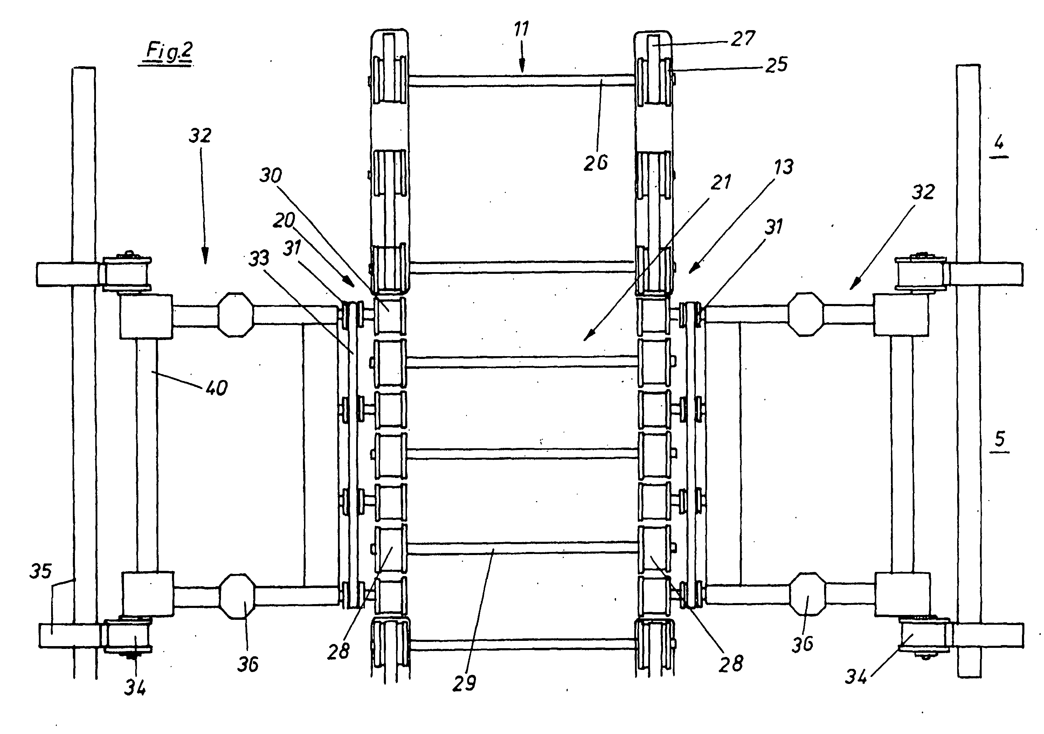

In Fig. 2 ist eine Draufsicht auf einen Vertikalförderer 13 in einer Ausgangsposition dargestellt. Der Vertikalförderer 13 ist in der Einlagerungsbahn 11 angeordnet, die im rechten Winkel von der Regalreihe 5 geschnitten wird. In diesem Schnittpunkt ist der Vertikalförderer 13 plaziert. Parallel zu der Regalreihe 5 verläuft eine Regalgasse 4. Die Einlagerungsbahn 11 weist durch Bänder 27 miteinander verbundene und angetriebene Rollen 25 auf, die jeweils als Rollenpaare ausgebildet sind, die durch Achsen 26 miteinander verbunden sind. Auf diese Weise wird eine Einlagerungsbahn 11 gebildet, die zwei Reihen von Rollenantrieben aufweist. Auf diesen liegt eine Last 3 auf und wird von den Rollen 25 bzw. den Rollenpaaren die Einlagerungsbahn entlangtransportiert und gelangt dann zu dem Vertikalförderer 13. Der Vertikalförderer 13 weist vertikal bewegbare Aufnahmeeinrichtungen 20 und stationäre Transportelemente 21 auf. Die stationären Transportelemente 21 sind ebenfalls im wesentlichen von Rollen 28 gebildet, die ebenfalls paarweise ausgebildet sind und durch Achsen 29 miteinander verbunden sind. Diese Rollen sind in Fortführung der Linie der Einlagerungsbahn 11 angeordnet. Zwischen den einzelnen Rollen 28 ist jeweils ein Abstand vorgesehen, so daß jeweils ein Zwischenraum verbleibt, in dem die ebenfalls als Rollen 30 ausgebildeten Aufnahmeeinrichtungen 20 angeordnet sind. Im dargestellten Ausführungsbeispiel sind zweimal drei Rollen 28, also sechs Rollen 28 vorgesehen, die die Transportelemente bilden, und es sind zweimal vier Rollen 30 vorgesehen, die vertikal anhebbar sind und damit im wesentlichen die Aufnahmeeinrichtungen 20 bilden. Diese sind abwechselnd zueinander angeordnet, so daß insgesamt eine durchgehende Reihe von Rollen in der Einlagerungsbahn 11 gegeben ist. Die Rollen 30 sind über Achsen 31 an einem Förderelement 32 befestigt und werden gemeinsam von einem Antriebsband 33 angetrieben. Unmittelbar benachbart zu den Rollen 25 der Einlagerungsbahn 11 sind jeweils Rollen 30 der Aufnahmeeinrichtung 20 angeordnet, die angetrieben sind und so auch für einen kontinuierlichen Weitertransport sorgen können. Auf jeder Seite des Vertikalförderers 13 ist also ein Förderelement 32 vorgesehen, das über Rollen 34 an dem Gestänge 35 eines Regallagers vertikal nach oben verfahrbar ist. Die Förderelemente 32 weisen Gelenke 36 auf, mit denen der vordere Abschnitt der Förderelemente 32 mit den Aufnahmeeinrichtungen 20 nach unten wegklappbar ist.

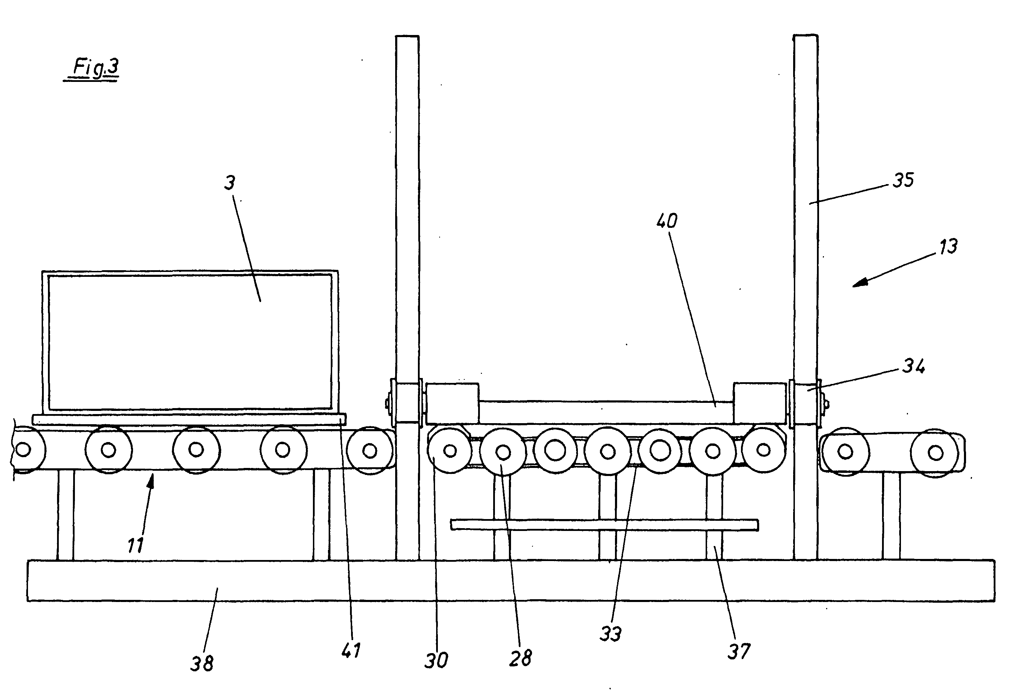

In Fig. 3 ist eine geschnittene Seitenansicht des Vertikalförderers 13 dargestellt. Gleiche Elemente sind mit gleichen Bezugszeichen gekennzeichnet. Die Rollen 28 der Transportelemente 21 sind durch vertikale Streben 37 auf dem Boden 38 des Regallagers angeordnet. Eine auf einer Transportplatte 41 angeordnete Last wird über die Einlagerungsbahn 11 dem Vertikalförderer 13 zugeführt. Dabei sind zunächst die Rollen 30 der Aufnahmeeinrichtung 20 etwa in der gleichen Höhe wie die Rollen 28 der Transportelemente 21. Die Aufnahmeeinrichtung 20 kann auch unterhalb das Niveau der Transportelemente 21 abgesenkt werden, um ein leichteres Aufschieben der Transportplatte 41 zu ermöglichen.

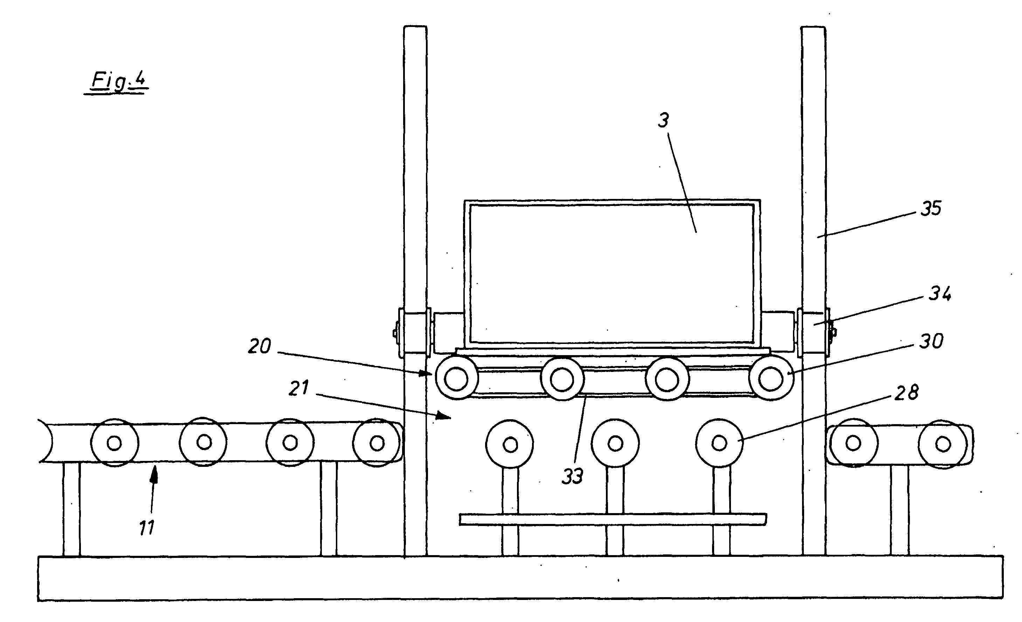

In Fig. 4 ist eine weitere Seitenansicht des Vertikalförderers dargestellt, wobei der Vertikalförderer die Last 3 jetzt angehoben hat.

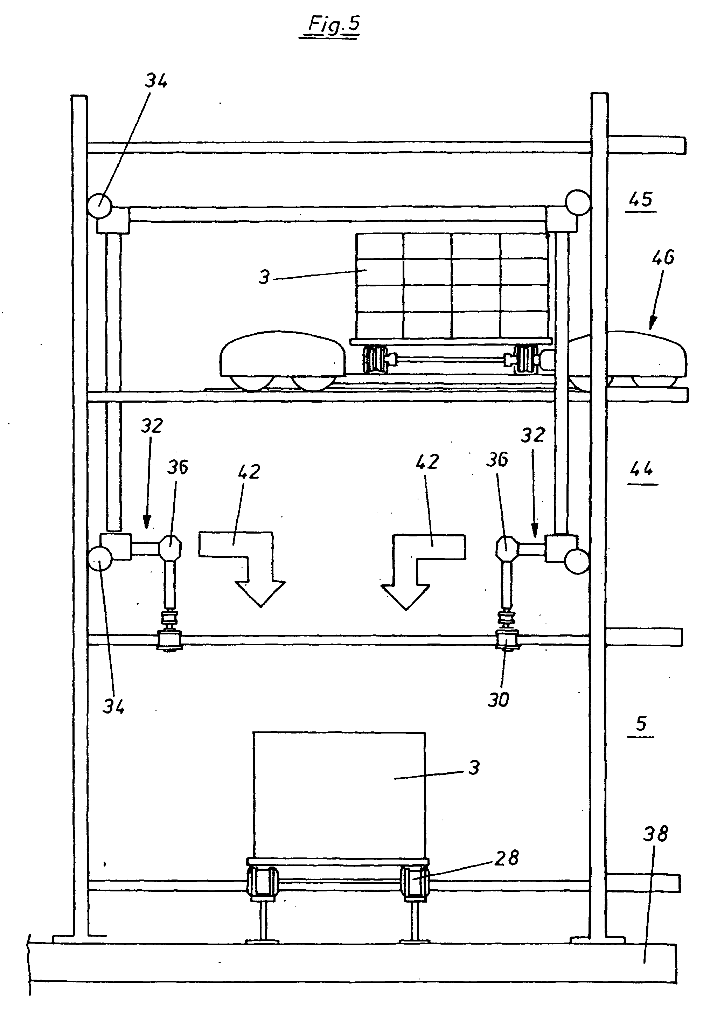

In Fig. 5 ist eine gegenüber den Figuren 3 und 4 um 90° gedrehte geschnittene Seitenansicht dargestellt. Es sind die verschiedenen Ebenen 4, 44 und 45 des Regallagers zu erkennen, wobei der Vertikalförderer 13, zumindest der vertikal bewegbare Teil des Vertikalförderers 13, nach oben verfahren ist. In der oberen Ebene wird eine Last 3 in der neben dem Vertikalförderer angeordneten Regalgasse 5 mit Hilfe eines Transportwagens 46 neben den Vertikalförderer verfahren und kann von dort in den Vertikalförderer 13, genauso wie in ein Regalfach, eingelagert werden. Die Pfeile 42 zeigen an, daß der vordere Bereich der Förderelemente 32 an dem Gelenk 36 nach unten abgeklappt worden ist, so daß die Rollen 30 nach unten hängen. Das Gelenk 36 ist so positioniert, daß ein so großer Abschnitt der Förderelemente 32 wegklappt, so daß ein freier Innenraum entsteht, der breiter ist als eine Last 3. Der Vertikalförderer 13 kann nach unten gefahren werden, wobei erst dann die Rollen 30 wieder an dem Gelenk 36 nach oben geschwenkt werden und die bereits an der Einlagerunsposition wartende Last 3 von unten erfassen. Der Abstand zwischen den Rollen 28 der Transportelemente und dem Boden 38 des Regallagers ist an den von dieser Schwenkbewegung benötigten Raum angepaßt.

## Patentansprüche

1. Vertikalförderer zum Transport einer Last in einem Regallager,
wobei der Vertikalförderer (13) mehrere zueinander beabstandete Aufnahmeeinrichtungen (20) aufweist,
die Aufnahmeeinrichtungen (20) zur Aufnahme einer Last (3) dienen, und
die zueinander beabstandeten Aufnahmeeinrichtungen (20) gemeinsam vertikal verfahrbar sind,
**dadurch gekennzeichnet,**
**daß** in jeder außer der untersten Ebene des Vertikalförderers abklappbare Transportelemente vorgesehen sind, wobei beim Steuern einer Last zu einer bestimmten Ebene der Vertikalförderer an eine Position etwas oberhalb der bestimmten Ebene gefahren wird, die abgeklappten Transportelemente zurückgeklappt und der Vertikalförderer nach untengefahren wird und dabei die Last auf den Transportelementen absetzt.

2. Vertikalförderer nach Anspruch 1, **dadurch gekennzeichnet, daß** die Aufnahmeeinrichtungen (20) angetrieben sind, so daß eine horizontale Beförderung der Last (3) möglich ist.

3. Vertikalförderer nach einem der Ansprüche 1 oder 2, **dadurch gekennzeichnet, daß** der Vertikalförderer (13) in der untersten Ebene stationäre Transportelemente (21) aufweist.

4. Vertikalförderer nach Anspruch 3, **dadurch gekennzeichnet, daß** die stationären Transportelemente (21) beabstandet zueinander angeordnet sind.

5. Vertikalförderer nach einem der vorhergehenden Ansprüche, **dadurch gekennzeichnet, daß** die Aufnahmeeinrichtungen (20) und die Transportelemente (21) alternierend angeordnet sind.

6. Vertikalförderer nach einem der vorhergehenden Ansprüche, **dadurch gekennzeichnet, daß** die Aufnahmeeinrichtungen (20) bis etwas unterhalb der Transportelemente (21) senkbar sind.

7. Vertikalförderer nach einem der vorhergehenden Ansprüche, **dadurch gekennzeichnet, daß** die Aufnahmeeinrichtungen (20) von angetriebenen Rollen (30) gebildet sind.

8. Vertikalförderer nach einem der vorhergehenden Ansprüche, **dadurch gekennzeichnet, daß** die Transportelemente (21) von Rollen (28) gebildet sind.

9. Vertikalförderer nach einem der vorhergehenden Ansprüche, **dadurch gekennzeichnet, daß** die Aufnahmeeinrichtungen (20) wegklappbar ausgebildet sind.

10. Regallager mit mindestens eine Regalreihe 5, **dadurch gekennzeichnet, dass** ein Vertikalförderer (13) nach einem der vorhergehenden Ansprüche in mindestens einer der Regalreihen angeordnet ist.

## Claims

1. A vertical conveyor for transporting a load in storage shelving,
wherein the vertical conveyor (13) has a plurality of receiving devices (20) spaced at a distance from one another, said receiving devices (20) serve to receive a load (3), and
said receiving devices (20) spaced at a distance from one another can be jointly displaced vertically, **characterised in**
**that** in every level of the vertical conveyor apart from the lowest one, hinged transport elements are provided wherein during control of a load to a certain level, the vertical conveyor is driven to a position slightly above the certain level, the hinged transport elements are folded back and the vertical conveyor is driven downwards and places the load onto the transport elements.

2. The vertical conveyor according to claim 1, **characterised in that** the receiving devices (20) are driven so that a horizontal conveyance of the load (3) is possible.

3. The vertical conveyor according to any one of claims 1 or 2, **characterised in that** the vertical conveyor (13) has stationary transport elements (21) in the lowermost level.

4. The vertical conveyor according to claim 3, **characterised in that** the stationary transport elements (21) are arranged at a distance from one another.

5. The vertical conveyor according to any one of the preceding claims, **characterised in that** the receiving devices (20) and the transport elements (21) are arranged alternately.

6. The vertical conveyor according to any one of the preceding claims, **characterised in that** the receiving devices (20) can be lowered to somewhat below the transport elements (21).

7. The vertical conveyor according to any one of the preceding claims, **characterised in that** the receiving devices (20) are formed by driven rollers (30).

8. The vertical conveyor according to any one of the preceding claims, **characterised in that** the transport elements (21) are formed by rollers (28).

9. The vertical conveyor according to any one of the preceding claims, **characterised in that** the receiving devices (20) are constructed so that they can be folded away.

10. Storage shelving with at least one row of shelves 5, **characterised in that** a vertical conveyor (13) according to any one of the preceding claims is arranged in at least one of the rows of shelves.

## Revendications

1. Convoyeur vertical pour le transport d'une charge dans un entrepôt à rayonnages, le convoyeur vertical (13) comprenant plusieurs dispositifs de réception (20) espacés, les dispositifs de réception (20) servant à recevoir une charge (3) et les dispositifs de réception (20) espacés étant mobiles conjointement,
**caractérisé en ce que** des éléments de transport repliables sont prévus dans chaque niveau du convoyeur vertical sauf le niveau du bas, étant précisé que lorsqu'une charge est dirigée dans un plan défini, le convoyeur vertical est amené dans une position située légèrement au-dessus de ce plan défini, que les éléments de transport repliés sont rabattus et le convoyeur vertical est déplacé vers le bas en déposant la charge sur les éléments de transport.

2. Convoyeur vertical selon la revendication 1, **caractérisé en ce que** les dispositifs de réception (20) sont entraînés, de sorte qu'un transport horizontal de la charge (3) est possible.

3. Convoyeur vertical selon la revendication 1 ou 2, **caractérisé en ce qu'**il comporte dans le plan du bas des éléments de transport stationnaires (21).

4. Convoyeur vertical selon la revendication 3, **caractérisé en ce que** les éléments de transport stationnaires (21) sont espacés les uns des autres.

5. Convoyeur vertical selon l'une des revendications précédentes, **caractérisé en ce que** les dispositifs de réception (20) et les éléments de transport (21) sont disposés en alternance.

6. Convoyeur vertical selon l'une des revendications précédentes, **caractérisé en ce que** les dispositifs de réception (20) sont aptes à être abaissés jusqu'à une position située légèrement au-dessous des éléments de transport (21).

7. Convoyeur vertical selon l'une des revendications précédentes, **caractérisé en ce que** les dispositifs de réception (20) sont formés par des rouleaux entraînés (30).

8. Convoyeur vertical selon l'une des revendications précédentes, **caractérisé en ce que** les éléments de transport (21) sont formés par des rouleaux (28).

9. Convoyeur vertical selon l'une des revendications précédentes, **caractérisé en ce que** les dispositifs de réception (20) sont conçus pour être éloignés par pivotement.

10. Entrepôt à rayonnages avec au moins une rangée de rayonnage (5), **caractérisé en ce qu'**un convoyeur vertical (13) selon l'une des revendications précédentes est disposé dans l'une au moins des rangées de rayonnage.
